# EUROPEAN PATENT SPECIFICATION

(11) **EP 1 415 742 B1**
(45) Date of publication and mention of the grant of the patent: **08.10.2008**
(21) Application number: 03445123.7
(22) Date of filing: 28.10.2003
(51) Int. Cl.: B23B 29/24

(54) **Indexible turning tool for chipforming machining**
Indexierbares Drehwerkzeug zur spanabhebenden Bearbeitung
Outil indexable pour usinage par enlèvement de copeaux

(30) Priority: 31.10.2002 SE 0203199
(43) Date of publication of application: 06.05.2004
(73) Proprietor: Sandvik Intellectual Property AB, 811 81 Sandviken (SE)
(72) Inventor: Edler, Daniel, 830 22 Faker (SE)
(74) Representative: Taquist, Henrik Lennart Emanuel

(56) References cited:
- EP-A- 1 070 563
- EP-A- 1 186 367
- US-A- 4 475 853

## Description

### Field of the Invention

The present invention relates to an indexible turning tool comprising a holder extending rearwardly from a free end along a centre axis around which the same is indexible, as well as a set of exchangeable cutting inserts, which are received in circumferentially spaced-apart pockets in the free end of the holder, and generally positioned in a reference plane extending perpendicularly to the centre axis, each cutting insert including a top surface and a bottom surface, a main plane thereof coinciding with said bottom surface, wherein a number of the cutting inserts have their top surfaces facing forwardly from the holder.

The tool is preferably intended for metal machining.

### Prior Art

A tool of the type generally described above is disclosed in EP 1260294 B1, which is based on an application (02010649-8) claiming priority from an earlier date than the present application, but being published on a later date. An advantage of this tool is that the cutting forces being most dominant during turning, viz. the tangential forces, are taken up axially in the tool holder instead of radially. This means that the tool holder, which is often slender, does not deflect and cause vibrations. A shortcoming of the tool in question is, however, that all of the cutting inserts that can be indexed to an operative cutting position are located with their main planes coinciding with the imaginary reference plane in which they are commonly placed and which is perpendicular to the centre axis of the holder. Normally the cutting inserts are also identical. This means that each individual cutting insert will assume one and the same angular position relative to the workpiece when indexed to the operative state. Indexing of the tool holder therefore makes it possible to replace a worn insert by a fresh one, but does not change the angle of attack of any insert. In other words, the tool cannot perform different machining operations by simply indexing the tool holder.

A primary purpose of the present invention is to provide a turning tool of the above-captioned type, which promotes the tool's availability for different machining operations.

Another purpose of the present invention is to reduce the setting time between different types of working operations, for example turning and threading.

### Summary of the invention

At least the primary purpose of the present invention is achieved by the features defined in the characterizing clause of independent claim 1.

Preferred embodiments of the invention are furthermore defined in the independent claims.

### Description of the drawings

A number of embodiments of the tool according to the present invention are described below, wherein reference is made to the drawings, in which:
Fig. 1 shows, in a perspective view, an embodiment of an indexible turning tool according to the present invention;
Fig. 2 shows a detail of the cutting head of the tool according to Fig. 1; wherein the cutting head is provided with three exchangeable (replaceable) inserts;
Fig. 3 shows a detail of an alternative cutting head of a tool according to the present invention;
Fig. 4 shows, in a perspective view, an alternative embodiment of a tool according to the present invention, wherein the tool is in engagement with a workpiece and the forces acting on the tool;
Fig. 5 shows in detail the cutting head of the tool according to Fig. 4;
Fig. 6 shows how the tool according to Fig. 4 is used in threading;
Fig. 7 shows in a perspective view an alternative tool according to the present invention, where two replaceable inserts are oriented according to principles of the present invention; and
Fig. 8 shows, in a perspective view, the tool according to Fig. 7 during machining of a rotary workpiece.

### Detailed Description of Preferred Embodiments of the Invention

The present invention relates to a turning tool, i.e. a non-rotary tool which for example can perform cutoff operations, grooving, etc. The turning tool is indexible about a longitudinal centre axis to enable one of a plurality of exchangeable cutting inserts to be placed in an operative cutting position. Additionally, each of the inserts is itself indexible.

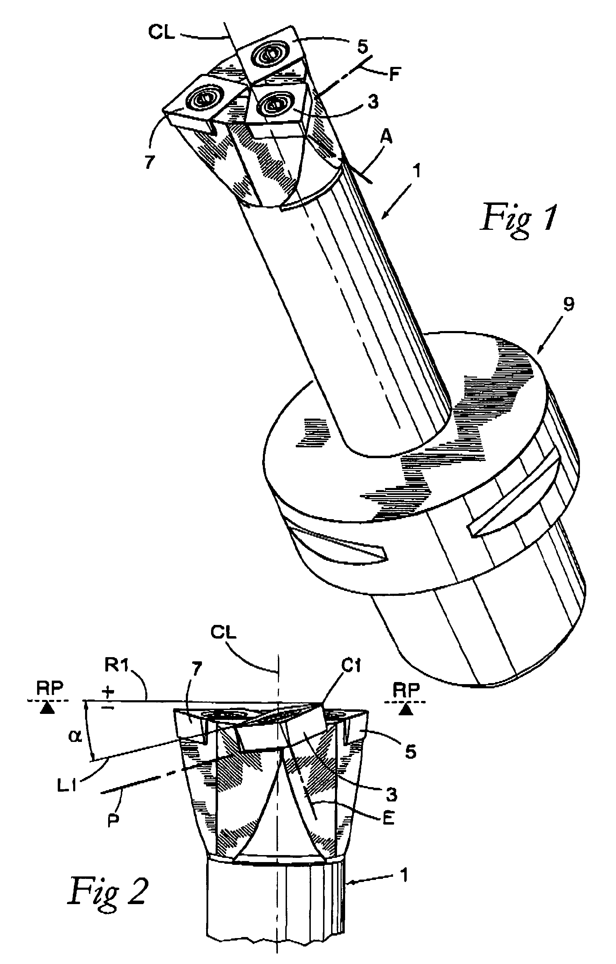

The tool according to the present invention as shown in Fig. 1 comprises a tool body that includes a holder 1 and a securing portion 9. The holder 1 is provided at its free end with a number of insert pockets for receiving replaceable, indexible inserts 3, 5, 7, the number of which in the shown embodiment being three.

All inserts 3, 5, 7 are oriented such that their respective main planes P extend laterally in relation to the longitudinal centre axis CL of the holder. The "main plane" shall be understood as a plane which coincides with the bottom surface of the insert.

As is shown in Fig. 1 the holder 1 is centrally located on the securing portion 9 of the tool body, which is intended to be tightened firmly in a tool machine. The tool according to the invention is a turning tool that does not rotate during operation. However, it is possible to index the tool, i.e. rotate the securing portion 9 about an indexing axis in order to feed a new insert to an operative cutting location. That is, the indexing of the tool can take place by rotating the holder 1 about its longitudinal centre axis CL, which would thus define an indexing axis.

In Fig. 2 the inserts 3, 5, 7 are shown more in detail, wherein the insert 3 has been inclined such that its main plane P forms an acute angle α with a perpendicular reference plane RP oriented perpendicularly to the holder's centre axis CL, and wherein the angle α lies in a tangential reference plane, i.e. a plane oriented generally tangentially relative to a radius of the holder. Such an inclination could be achieved, for example, by rotating the insert 3 of Fig. 1 about an axis A defined by a radius of the holder 1 that passes through the insert's centre axis E (see Fig. 2 for the axis E). From Fig. 2 it will be appreciated that a line L1 extending parallel to the main plane P from an axially foremost corner C1 of the insert's front cutting face and through the insert's centre axis E forms the angle α with a reference line R1 that lies in the perpendicular reference plane RP and also passes through both the insert's centre axis E and the axially foremost corner of the insert's front cutting face. The angle α has suitably a value in the range of -45° ≤ α ≤ +45° wherein the angle is measured from the reference line R1, and where the angle α is positive above the reference line R1 and negative under the reference line R1.

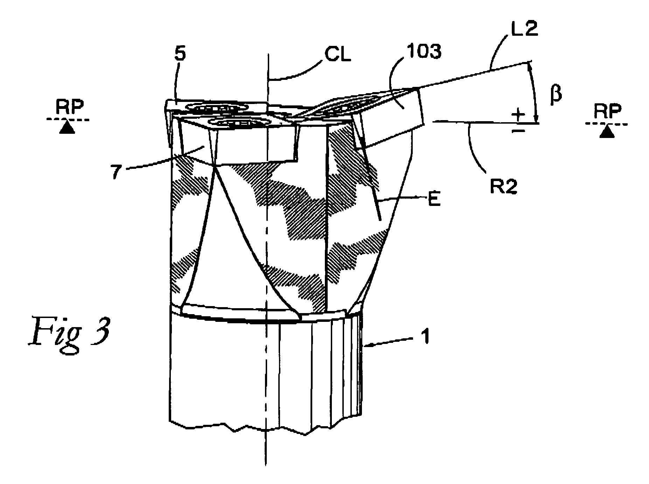

In Fig. 3 is shown how a corresponding insert 103 on an alternative holder 1 has been inclined at an angle β such that the main plane P forms an acute angle β with the perpendicular reference plane RP, i.e. a plane oriented perpendicularly to the holder's centre axis CL, wherein the angle β lies in an axial reference plane, i.e. a plane that contains the holder's centre axis CL. The angle β could be formed, for example, by rotating the insert 3 of Fig. 1 about an axis F which is: (i) oriented tangent to a radius of the holder 1 and (ii) extends through the insert's centre axis E. It will be appreciated that a line L2 extending parallel to the main plane of the insert 103 from an axially rearmost corner of a front cutting face of the insert and through the insert's centre axis E forms the angle β with a reference line R2 which lies in the perpendicular reference plane RP and which also passes through both the insert's centre axis E and the axially rearmost corner of the insert's front cutting face. The axially rearmost corner of the insert's front cutting face lies adjacent the holder's centre axis CL. The angle β has suitably a value in the range of -45° ≤ β ≤ +45°, wherein the angle is measured from the reference line R2, and where the angle β is positive above the reference line R2 and negative under the reference line R2.

It will also be appreciated that, within the scope of the invention, an insert could be inclined by both the angles α and β.

An important feature of the present invention is that the main plane of each of the inserts 3; 103, 5, 7 has a dimension extending laterally in relation to the axial direction CL of the holder 1; 101, wherein according to the present invention also the inserts 3; 103 are regarded as extending laterally across the axial direction CL despite the fact that they are inclined at a certain angle. Generally, this expression "laterally" is given such an interpretation that not only is the insert located in a plane perpendicularly to the axial direction CL, but also inclined within the indicated angular range.

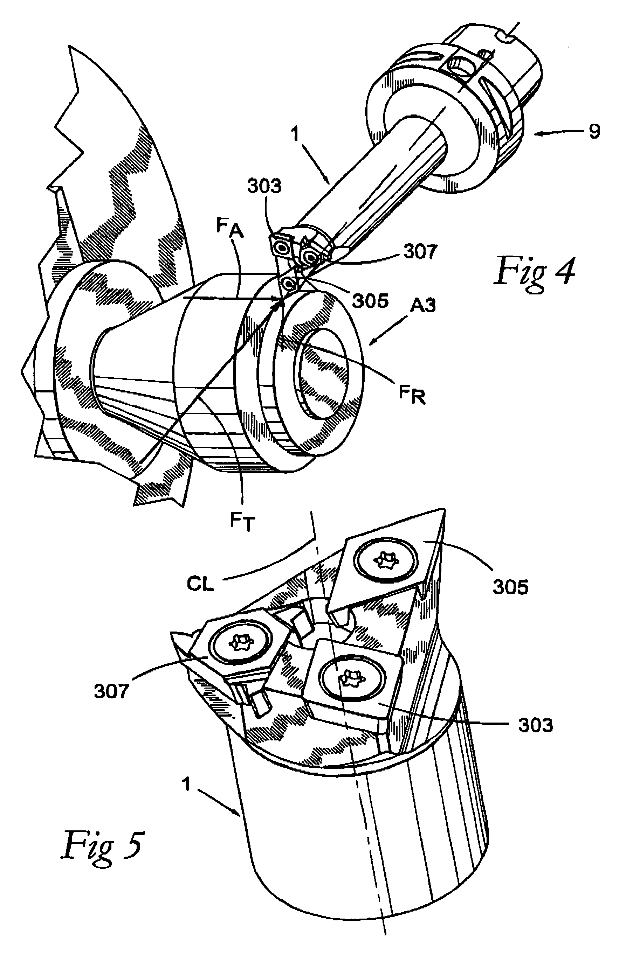

Fig. 4 shows how an embodiment of a tool according to the present invention is used. The holder 1 is centrally (coaxially) oriented in relation to the securing portion 9. Fig. 4 shows schematically how one of three inserts 303, 305, 307, more exactly a copying insert 305, machines a workpiece A3.

Even more detail is shown in Fig. 5 of the inserts of the tool according to Fig. 4, wherein these inserts represent a typical set up of inserts. From Fig. 5 it appears how the holder 1 is equipped with a turning insert 303 for heavy duty machining, a copying insert 305 and a threading insert 307. These inserts 303, 305, 307 may be inclined at a certain angle α and/or β as above described.

Shown in Fig. 4 is how different forces affect the copying insert 305, wherein FT designates a tangential force; FA designates an axial force; and FR designates a radial force. The absolute biggest force that influences the insert is the tangential force FT, which in the embodiment according to Fig. 4 has a direction along the longitudinal direction of the holder 1. This means that the tangential force FT is absorbed by the holder 1 without causing a pronounced deflection of the holder 301. The force situation as shown in Fig. 4 entails also less tendency to vibrations than in conventional turning tools.

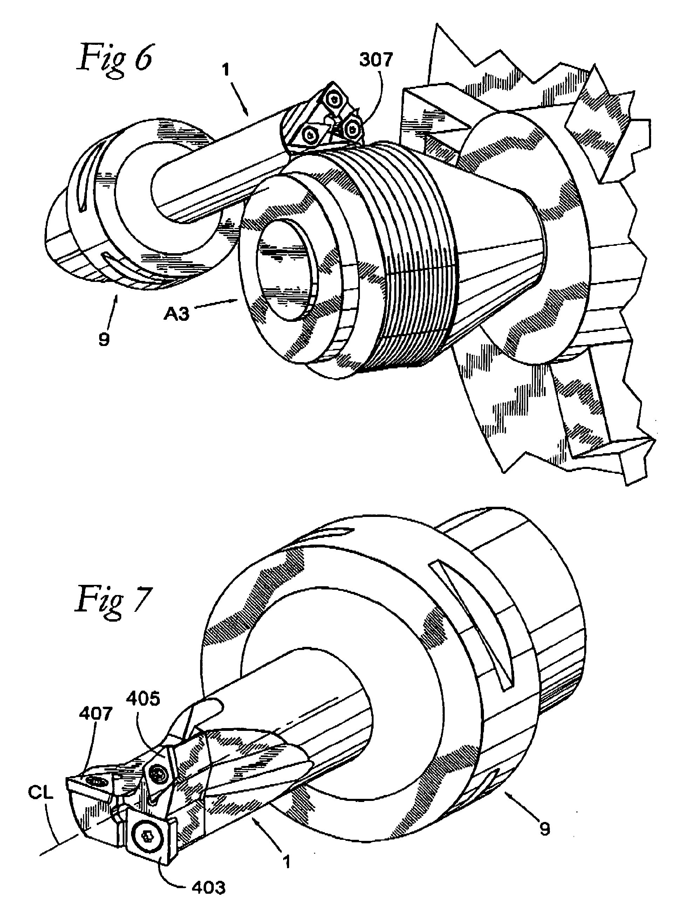

In Fig. 6 is shown how the tool according to the present invention is used in order to make use of the threading insert 307 to produce a thread on the rotary workpiece A3.

In Fig. 7 is shown an alternative embodiment of a tool according to the present invention. As is shown in Fig. 7 two replaceable indexible inserts 403 and 405 are oriented in relation to the holder 1 according to the principles of the present invention, i.e. the main plane of the inserts 403 and 405 extends laterally of the axial direction CL for the tool. A third insert 407 of the tool according to Fig. 7 has a conventional orientation on the holder 1. In the embodiment shown in Fig. 7 the insert 403 is a turning insert, while the insert 405 constitutes a copying insert. The inserts 403 and 405 generally perform different types of machining, i.e. the insert 403 performs heavy duty machining while the copying insert 405 performs a finish machining.

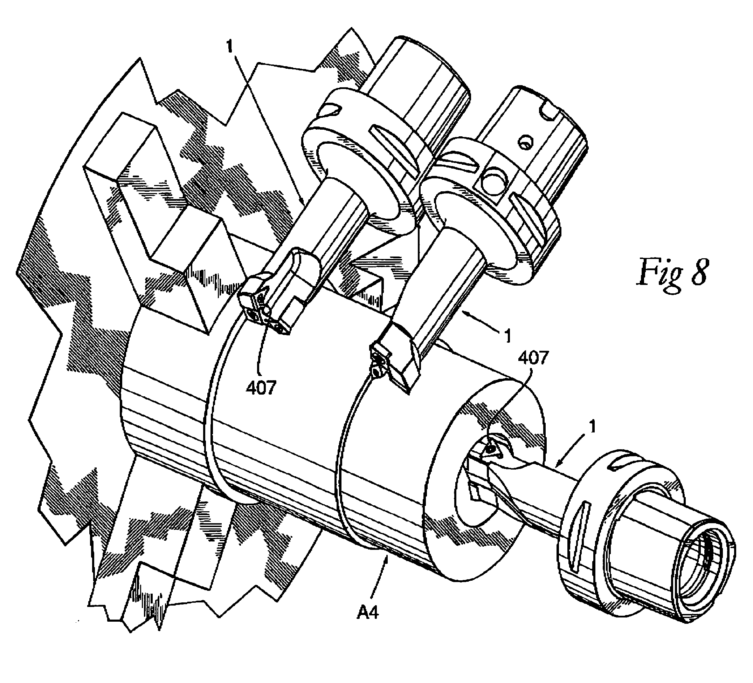

Fig. 8 shows examples of how the tool according to Fig. 7 is used when machining a rotary workpiece A4. As is shown in Fig. 8 the conventional orientation of the insert 407 causes this insert for example to become useful for internal turning.

The turning tool according to the present invention thus carries a number of exchangeable inserts, preferably of different types, which entails that this turning tool by indexing thereof can be adjusted simply and quickly between different kinds of turning operations.

### Conceivable Modifications of the Invention

In the above described embodiments, the tool according to the present invention is equipped with inserts of three different types, which makes the tool useful in three different kinds of machining operations. However, one can within the limits of the invention also provide tools equipped with interchangeable inserts of only one or two types that are present in different quantities.

Generally, in all of the described embodiments of the tool according to the present invention as described the inserts are secured into their insert pockets by central screws. As this is outstanding conventional technique these screws have not been described in further detail. Within the limits of the present invention the interchangeable inserts might be secured in their insert pockets by alternative clamping means, wherein, in a not limiting sense, one example could include the use of a top clamp portion.

It should also be mentioned that the holder of the tool may be placed non-centrally (i.e. eccentrically) on the securing portion.

## Claims

1. An indexible turning tool comprising a holder (1) extending rearwardly from a free end along a centre axis (CL) around which the same is indexible, as well as a set of exchangeable cutting inserts (3, 5, 7, 407), which are received in circumferentially spaced-apart pockets in the free end of the holder, and generally positioned in a reference plane (RP) extending perpendicularly to the centre axis (CL), each cutting insert including a top surface and a bottom surface, a main plane (P) thereof coinciding with said bottom surface, wherein a number of the cutting inserts have their top surfaces facing forwardly from the holder, **characterized in that** an angle (α, β) between the main plane (P) of at least one cutting insert (3, 407) and said reference plane (RP) differs from the angle between the main plane of the other cutting inserts (5, 7) and said reference plane (RP).

2. Turning tool according to claim 1, **wherein** said angle (α, β) is acute within the range of -45° to +45°.

3. Turning tool according to claim 2, **wherein** said angle (α) lies in a plane oriented generally tangentially relative to a radius of the holder.

4. Turning tool according to claim 2, **wherein** said angle (β) lies in a plane containing the centre axis (CL) of the holder (1).

5. Turning tool according to any one of the preceding claims, wherein the main plane of one (407) of the inserts is oriented substantially parallel to the centre axis (CL) of the holder.

6. Turning tool according to claim 1, **wherein** radial spacings of the respective inserts from the centre axis of the holder are different from one another.

## Patentansprüche

1. Wendedrehwerkzeug, welches einen Halter (1), der sich von einem freien Ende entlang einer Mittenachse (CL), um welche er wendbar ist, nach hinten erstreckt, sowie einen Satz von austauschbaren Schneideinsätzen (3, 5, 7, 407) aufweist, die in in Umfangsrichtung voneinander beabstandeten Taschen im freien Ende des Halters aufgenommen sind und im allgemeinen in einer Bezugsebene (RP) angeordnet sind, welche sich senkrecht zur Mittenachse (CL) erstreckt, wobei jeder Schneideinsatz eine obere Fläche und eine untere Fläche hat, von denen eine Hauptebene (P) mit der unteren Fläche zusammenfällt, wobei bei einer Anzahl der Schneideinsätze die oberen Flächen von dem Halter nach vorne weisen, **dadurch gekennzeichnet, daß** ein Winkel (α, β) zwischen der Hauptebene (P) wenigstens eines Schneideinsatzes (3, 407) und der Bezugsebene (RP) sich von dem Winkel zwischen der Hauptebene der anderen Schneideinsätze (5, 7) und der Bezugsebene (RP) unterscheidet.

2. Drehwerkzeug nach Anspruch 1, wobei der Winkel (α, β) ein spitzer Winkel im Bereich von -45° bis +45° ist.

3. Drehwerkzeug nach Anspruch 2, wobei der Winkel (α) in einer Ebene liegt, die relativ zu einem Radius des Halters im allgemeinen tangential orientiert ist.

4. Drehwerkzeug nach Anspruch 2, wobei der Winkel (β) in einer Ebene liegt, welche die Mittenachse (CL) des Halters (1) enthält.

5. Drehwerkzeug nach einem der vorangegangenen Ansprüche, wobei die Hauptebene eines (407) der Einsätze im wesentlichen parallel zur Mittenachse (CL) des Halters orientiert ist.

6. Drehwerkzeug nach Anspruch 1, wobei die radialen Abstände der entsprechenden Einsätze von der Mittenachse des Halters sich voneinander unterscheiden.

## Revendications

1. Un outil tournant indexable comprenant un support (1) s'étendant vers l'arrière depuis une extrémité libre le long d'un axe central (CL) autour duquel le support est indexable ainsi qu'un jeu échangeable de plaquettes (3, 5, 7, 407) de coupe, qui sont reçues dans des cases séparées en périphérie dans l'extrémité libre du support, et généralement positionnées dans un plan de référence (RP) s'étendant perpendiculairement à l'axe central (CP), chaque plaquette de coupe comportant une surface supérieure et une surface inférieure, un plan principal (P) des plaquettes coïncidant avec ladite surface inférieure, un nombre de plaquettes de coupe ayant leur surface supérieure tournée vers l'avant du support, **caractérisé en ce qu'**un angle (α,β) entre le plan principal (P) d'au moins une plaquette de coupe (3, 407) et ledit plan de référence (RP) diffère de l'angle entre le plan principal des autres plaquettes de coupe (5, 7) et ledit plan de référence (RP).

2. Outil tournant selon la revendication 1, dans lequel ledit angle (α, β) est aigu dans l'intervalle -45° à 45°.

3. Outil tournant selon la revendication 2, dans lequel ledit angle (α) se trouve dans un plan généralement orienté tangentiellement par rapport à un rayon du support.

4. Outil tournant selon la revendication 2, dans lequel ledit angle (β) se trouve dans un plan contenant l'axe central (CL) du support.

5. Outil tournant selon l'une quelconque des revendications précédentes, dans lequel le plan principal de l'une (407) des plaquettes de coupe est orienté sensiblement parallèle à l'axe central (CL) du support.

6. Outil tournant selon la revendication 1, dans lequel les espacements radiaux des plaquettes respectives depuis l'axe central du support sont différents les uns des autres.
